# EUROPEAN PATENT APPLICATION

(11) **EP 3 419 191 A1**
(43) Date of publication of application: **26.12.2018**
(21) Application number: 17177471.4
(22) Date of filing: 22.06.2017
(51) Int. Cl.: H04B 7/155

(54) **FLYABLE REPEATER DEVICE**

(71) Applicant: Deutsche Telekom AG, 53113 Bonn (DE)
(72) Inventor: SCHEPP, Ralph, 53343 Wachtberg (DE)
(74) Representative: Patentship Patentanwaltsgesellschaft mbH

(57) **Abstract**

The disclosure relates to a flyable repeater device (300), comprising: a radio repeater (312) configured: to receive a radio signal (313) from a base station (120), to regenerate the received radio signal (313) in order to increase its transmission range, and to transmit the regenerated radio signal (314); and a controller (311) configured: to lift the flyable repeater device (300) off the ground upon activation by a user (130) of the UAV (300) in order to enable the radio repeater (312) connecting to the base station (120) and extending the transmission range of the received radio signal (313) to the user (130).

## Description

### TECHNICAL FIELD

The present disclosure relates to a flyable repeater device, in particular a hand-held unmanned aerial vehicle (UAV) serving as flying radio repeater for antenna extension for mobile phone or Smartphone users or other devices connecting to a radio network in weak coverage areas. The disclosure further relates to a communication system using such flyable repeater device to improve communication and a communication method applying such flyable repeater device.

### BACKGROUND

Today's mobile networks are widely ubiquitous, but there are still areas with only limited/weak mobile network coverage. Especially in rural areas, in forests, mountains, but even in smaller villages sometimes people cannot properly connect to mobile networks due to poor direct coverage. Installing more base stations or radio cells for connecting to the mobile network may be inefficient for the network operator due to the low degree of capacity utilization in sparsely populated areas. Using a satellite telephone for connecting via satellite to the network may be inefficient for the user.

### SUMMARY

It is the object of the invention to provide a concept for improving communication efficiency in mobile networks, in particular in sparsely coveraged areas as described above.

This object is achieved by the features of the independent claims. Further implementation forms are apparent from the dependent claims, the description and the figures.

The invention is based on the ideas described in the following: People trying to use Smartphones or mobile phones or other devices connecting to a mobile network or a wireless network such as Laptops, Notebooks, tabletPCs, etc. in areas with weak coverage typically rise their phones up in the air in order to see if they can get a connection. This widely intuitive behavior makes sense, as the mobile network radiation in those areas is much more horizontal than in dense, well equipped environments.

The chance to get connected to a base station especially in topology-wise flat rural areas is indeed much higher if the user's phone would be located at a higher altitude, as it would allow line-of-sight connections even to base stations which are relatively far away. For example, in a forest, the user might not get any radio frequencies on the ground, but if the user would be able to raise his phone above the trees, he usually gets a (much better) connection.

Form factors and functions of drones are developing very fast. Today small, low-priced drones, with foldable wings, are available that easily find way into the user's pocket or hand bag. By their chipsets, these drones can easily follow preconfigured missions or can be steered even by amateurs via simple Smartphone applications. With modern stabilizing mechanisms they are able to keep their position up in the air.

Small LTE (Long Term Evolution) repeaters or mobile Wifi Hotspots (so called MiFi-devices) are widely available on the market. Zigbee or Bluetooth are established formats for near field/ short distance communication.

A basic concept of the invention is to combine a small low cost drone with a standard radio repeater in order to establish a proper connection in rural areas with limited ground coverage via sending the repeater equipped drone to a low altitude (e.g. between 5 and 10 meters) above the ground. The flying repeater will then be able to connect to a base station and to forward or repeat the radio signal (as LTE, WiFi, Bluetooth or whatever) to the mobile device (such as Smartphone or mobile phone) of the user. Once connected to the flying repeater, the user can do a call, send messages, or whatever he intends to do with the connection. Once he finishes his call or activity he can call back and/or land the drone/flying repeater, turn it off and put it back into his pocket.

In order to describe the invention in detail, the following terms, abbreviations and notations will be used:
- UAV:: unmanned aerial vehicle or drone
- GNSS:: Global Navigation Satellite System
- GPS:: Global Positioning System
- 5G:: fifth generation mobile network
- LTE:: Long Term Evolution
- BS:: Base Station, eNodeB
- RF:: radio frequency
- RAT:: radio access technology
- RSS:: received signal strength

In the following, unmanned aerial vehicles (UAVs) and drones are described. An UAV, commonly known as a drone, unmanned aircraft system (UAS), remotely piloted aircraft system (RPAS) or by several other names, is an aircraft without a human pilot aboard. An UAV is defined as a powered, aerial vehicle that does not carry a human operator, uses aerodynamic forces to provide vehicle lift, can fly autonomously or be piloted remotely, can be expendable or recoverable, and can carry a payload. The flight of UAVs may operate with various degrees of vehicular automation: either under remote control by a human operator, or fully or intermittently autonomously, by onboard computers. A flyable repeater device or system or simply called a flying repeater as described in the following is an UAV, RPAS or drone equipped with a radio repeater.

UAVs as described in the following may be equipped with global navigation satellite system (GNSS) receivers (e.g. GPS, GLONASS, Galileo) to determine their location to high precision (within a frew meters) using time signal transmitted along a line-of-sight propagation by radio from satellites to provide autonomous geo-spatial positioning. The GNSS receivers can be used for providing position, navigation or for tracking the position. Additionally the received signals allow the electronic receiver to calculate the current local time to high precision, which allows time synchronisation.

According to a first aspect, the invention relates to a flyable repeater device, comprising: a radio repeater configured: to receive a radio signal from a base station, to regenerate the received radio signal in order to increase its transmission range, and to transmit the regenerated radio signal; and a controller configured: to lift the flyable repeater device off the ground upon activation by a user of the UAV in order to enable the radio repeater connecting to the base station and extending the transmission range of the received radio signal to the user.

Such a flyable repeater device improves communication efficiency in mobile networks, in particular in sparsely populated areas, as the user can activate the controller of the UAV to lift the UAV off the ground in order to enable the radio repeater connecting the base station and extending the transmission range of the received radio signal up to the user.

The chance to get connected to the base station, especially in topology-wise flat rural areas is much higher at a higher altitude, as this allows line-of-sight connections even to base stations which are relatively far away. In a forest for example, the user may not get any radio frequencies on the ground, while the UAV with radio repeater gets a much better connection.

In an implementation form of the flyable repeater device, the flyable repeater device is foldable fitting into a pocket of the user.

This provides the advantage that the user can easily transport the UAV, e.g. during a walk in the forest or a trip into the green.

In an implementation form of the flyable repeater device, the radio repeater is configured to receive a radio signal according to a first radio access technology (RAT) and to transmit the regenerated radio signal according to the first RAT.

This provides the advantage that the radio repeater can be a simple forward and amplify device without complex circuitries required for frequency conversion or other tasks.

In an implementation form of the flyable repeater device, the radio repeater is configured to receive a radio signal according to a first RAT, to convert the received radio signal from the first RAT into a second RAT and to transmit the regenerated radio signal according to the second RAT.

This provides the advantage that the radio repeater can be flexibly applied with Smartphones or mobile phones supporting different RATs.

In an implementation form of the flyable repeater device, the first RAT is a mobile communication standard, in particular 5G, LTE or GSM; and the second RAT is a wireless communication standard, in particular WiFi, Bluetooth or Zigbee.

This provides the advantage that the radio repeater can receive a radio signal from a mobile communication network according to a mobile communication standard, for example, and convert this signal to a wireless communication standard, for example. In this implementation, the mobile phone of the user can have a simple wireless adapter, e.g. for Wi-Fi, Bluetooth or Zigbee and may establish a communication via a mobile communication network. Hence, complexity of the user's mobile phone or Smartphone can be reduced.

In an implementation form of the flyable repeater device, the controller is configured to lift the flyable repeater device in only a vertical ascent above the ground.

This provides the advantage that the UAV can be simply constructed. For example, a single propeller for lifting the UAV into the air may be sufficient.

In an implementation form of the flyable repeater device, the radio repeater is attached to the flyable repeater device, in particular removable attached to the flyable repeater device.

This provides the advantage that the flyable repeater device can be simple constructed, just by attaching the radio repeater to the UAV. For example, an existing radio repeater can be applied together with a common simple drone. When the radio repeater is removable attached to the drone, transportation is even simpler: The drone can be transported in one pocket of the user while the radio repeater can be transported in another pocket of the user.

In an alternative implementation form of the flyable repeater device, the radio repeater is embedded with the controller on a printed circuit board or on a chipset of the flyable repeater device.

This provides the advantage that the communication between radio repeater and UAV is more efficient as communication lines may be integrated on the PCB or chip-set which also provides a better immunity against interferences. Besides, the UAV can be designed as a compact device.

In an implementation form of the flyable repeater device, the controller is configured to navigate the flyable repeater device between a predefined altitude range.

This provides the advantage that in such a predefined altitude range, the network coverage may be better than on the ground, the user may still see the UAV and the UAV can fly without disturbing the common air traffic.

In an implementation form of the flyable repeater device, the controller is configured to determine a signal quality of the received radio signal, in particular a received signal strength (RSS), and the controller is configured to navigate the flyable repeater device based on an optimization criterion with respect to the signal quality in order to find a position where the signal quality is above a predefined threshold.

This provides the advantage that the UAV can find a position where the coverage is optimal for a connection with the mobile network. The predefined threshold may indicate a threshold below which a communication establishment with the mobile network is not possible or hardly possible. The RSS can be easily computed from the received radio signal.

In an implementation form of the flyable repeater device, the controller is configured to stabilize the flyable repeater device within the position where the signal quality is above the predefined threshold.

This provides the advantage that the UAV can stay in a position where the network coverage is optimal for establishing a connection with the network and for subsequent actions of the user such as calling another user, file downloading, surfing, video conferencing, etc.

In an implementation form of the flyable repeater device, the controller is configured to navigate the flyable repeater device based on an aerial coverage map, the aerial coverage map indicating positions where the signal quality is above the predefined threshold.

This provides the advantage that the UAV can be navigated into a position where the network coverage is optimal. The aerial coverage map may be provided by the mobile network via base station or may be stored in the UAV, for example.

In an implementation form, the flyable repeater device includes a global navigation satellite system (GNSS) receiver, configured to receive position data from at least one satellite, the position data indicating a position of the flyable repeater device, and the controller is configured to adjust the position data received by the GNSS receiver with coordinates on the aerial coverage map and configured to navigate the flyable repeater device to a position where the signal quality is above the predefined threshold.

This provides the advantage that the UAV knows its current location based on the GNSS position data. Hence, the UAV can find its current location on the aerial coverage map and can navigate to a location with better network coverage in order to improve communication efficiency.

In an implementation form of the flyable repeater device, the controller is configured to indicate the user before lifting the flyable repeater device off the ground if a position where the signal quality is above the predefined threshold is within a predefined range.

This provides the advantage that the user knows in advance if there is any position in the predefined range, e.g. in walking distance, where a connection estabilishment with a mobile network is possible. Hence the user can start lifting the drone or alternatively walk away to find a better location.

In an implementation form of the flyable repeater device, the controller is configured to transmit network coverage information to a network operator, in particular via the connection of the radio repeater with the base station, wherein the network coverage information is based on the signal quality of the received radio signal.

This provides the advantage that the network operator can be supported finding locations where the network coverage is bad. Hence, the network operator can plan rolling out his network with respect to optimum coverage.

According to a second aspect, the invention relates to a communication method comprising the following steps: receiving, by a radio repeater of a flyable repeater device, in particular a flyable repeater device according to the first aspect, a radio signal from a base station; regenerating the received radio signal, by the radio repeater, in order to increase its transmission range; transmitting the regenerated radio signal; and lifting the flyable repeater device off the ground, by a controller, upon activation by a user of the flyable repeater device in order to enable the radio repeater connecting to the base station and extending the transmission range of the received radio signal to the user.

Such a communication method improves communication efficiency in mobile networks, in particular in sparsely populated areas, as the user can activate the controller of the flyable repeater device to lift the flyable repeater device off the ground in order to enable the radio repeater connecting the base station and extending the transmission range of the received radio signal up to the user. As described above, the chance to get connected to the base station, especially in topology-wise flat rural areas is much higher at a higher altitude, as this allows line-of-sight connections even to base stations which are relatively far away. In a forest for example, the user may not get any radio frequencies on the ground, while the flyable repeater device with radio repeater gets a much better connection.

### BRIEF DESCRIPTION OF THE DRAWINGS

Further embodiments of the invention will be described with respect to the following figures, in which:
Fig. 1 shows a schematic diagram illustrating a generic working scheme of a flying repeater according to the disclosure.
Fig. 2 shows a schematic diagram illustrating the main components of a flying repeater according to the disclosure.
Fig. 3 shows a block diagram illustrating a flyable repeater device 300 according to the disclosure.
Fig. 4 shows a schematic diagram illustrating a communication method 400 using a flyable repeater device according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following radio repeaters are described. A repeater is an electronic device that receives a signal and retransmits it. Repeaters are used to extend transmissions so that the signal can cover longer distances or be received on the other side of an obstruction. Some types of repeaters broadcast an identical signal, but alter its method of transmission, for example, on another frequency or baud rate. A radio repeater is a radio receiver and transmitter that retransmits a radio signal. The radio repeater is used to extend the range of coverage of a radio signal. A radio repeater usually consists of a radio receiver connected to a radio transmitter. The received signal is amplified and retransmitted, often on another frequency, to provide coverage beyond the obstruction. Usage of a duplexer can allow the repeater to use one antenna for both receive and transmit at the same time.

The radio repeater and the mobile communication system as described hereinafter may be implemented by various technologies, in particular utilizing communication networks based on mobile communication standards such as LTE, in particular LTE-A and/or OFDM and successor standards such as 5G or based on IEEE 802.11 networks such as WiFi or based on other communication standards such as Bluetooth or Zigbee. The components and network nodes of such systems may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The radio repeater and the mobile communication system as described hereinafter may support different radio access technologies. A Radio Access Technology or (RAT) is the underlying physical connection method for a radio based communication network. Many modern phones support several RATs in one device such as Bluetooth, Wi-Fi and 3G, 4G or LTE.

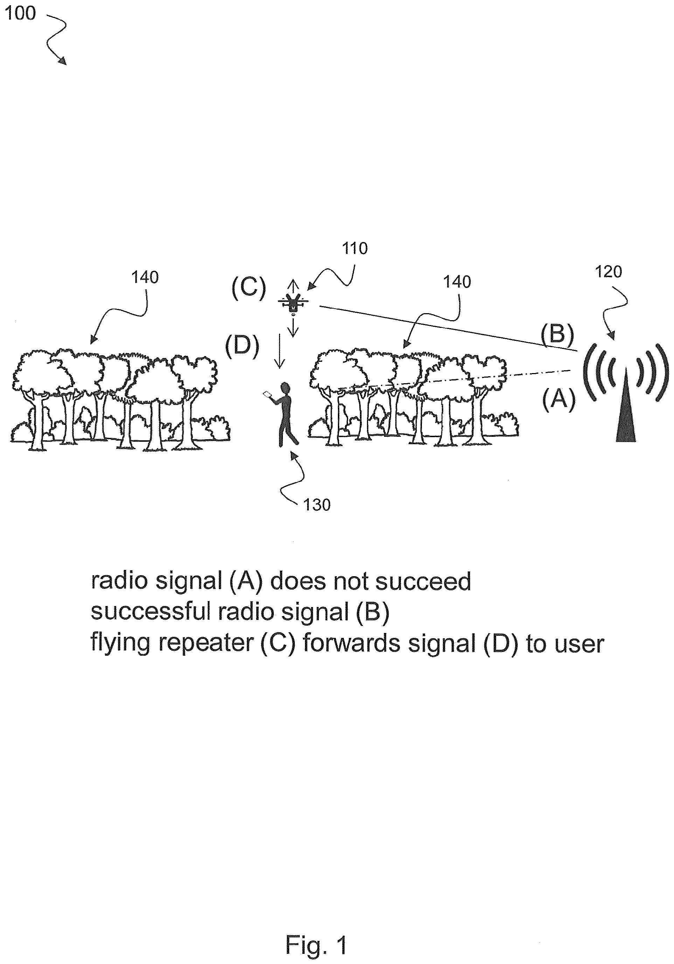

Fig. 1 shows a schematic diagram illustrating a generic working scheme 100 of a flying repeater 110 according to the disclosure. In sparsely populated areas, e.g. forests 140 as exemplarily shown in Fig. 1, the radio signal (A) does not succeed propagating through the woods 140 up to the mobile phone of the user 130. The radio signal (B), however, succeeds propagating above the woods 140 to a height of approximately 5m to 10m above the user 130 (approximately the height of the trees). A flying repeater (C), 110 which is lifted above the user 130 up to this height can successfully detect radio signal (B) and forward radio signal (D) to the user's 130 mobile phone in order to enable communication establishment with the mobile network. Radio signal (D) is a repeated or reconstructed version of radio signal (B). Alternatively, flying radio repeater 110 just forwards radio signal (B) as radio signal (D) to the user 130 (and his mobile phone). Of course, the flying repeater (C) can be lifted up to other heights than that of the trees, for example between 3 meters and 75 meters, i.e. below manned aviation.

Another use case or field of application for the flying repeater 110 is the use in mountain valleys and gorges to enable the mountaineer to connect to a mobile network and possibly to make an emergency call. Here, the flying repeater should be able to get so high in the air that it can connect to a mobile network, thus, for example, up to the peak of the mountain (and somewhat further).

The flying repeater 110 combines a small low cost drone (or UAV) with a standard radio repeater in order to establish a proper connection in rural areas 140 with limited ground coverage via sending the repeater equipped drone 110 to a low altitude (e.g. between 5 and 10 meters) above the ground. The flying repeater 110 will then be able to connect to a base station 120 and to forward or repeat the radio signal (as LTE, WiFi, Bluetooth or whatever) to the mobile device (Smartphone or mobile phone) of the user 130.

Once connected to the flying repeater 110, the user 130 can do a call, send messages, or whatever he intends to do with the connection. Once he finishes his call or activity he will call back/ land the drone/flying repeater 110, turn it off and put it back into his pocket.

In order to keep the system simple for the user the drone 110 can start directly from the user's 130 hands vertically up, for example without any steering options. To avoid crashes (with e.g. tree branches) it may have a minimum of anti-collision systems. Between a predefined altitude range of about approximately 5-10 meters the flying repeater 110 may test signal strengths and can stabilize where the signal is best.

The steering algorithm can be further enhanced by adding precise 3D aerial coverage maps to the chipset which may be provided by Telecommunication companies. Combined with on-board GPS the flying repeater 110 can find its own way to next best connectivity option, or give already before starting a signal to the user 130 if an ascent will make sense or not.

Furthermore the flying repeaters 110 can help Telecommunication companies to "crowdsource" information on their networks in order to improve them. It can, e.g. provide information on coverage needs in network gaps, best altitudes for coverage, insights on radiation and frequency improvements.

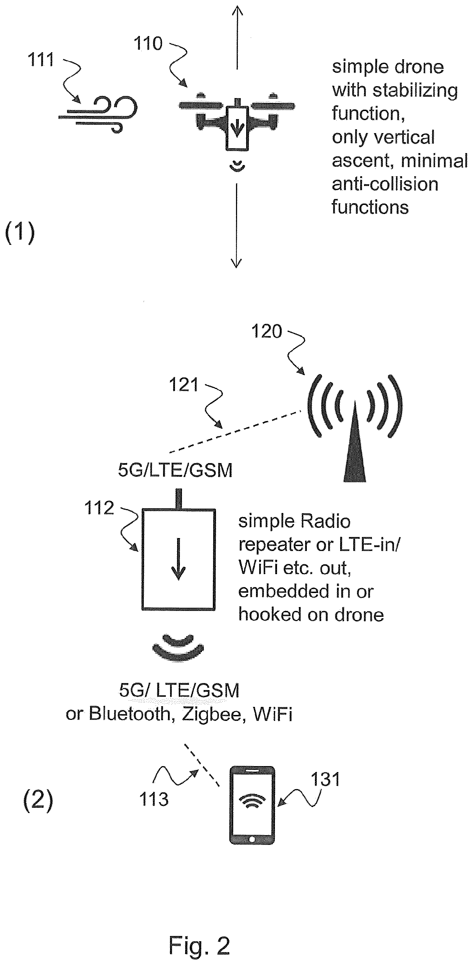

Fig. 2 shows a schematic diagram illustrating the main components of a flying repeater according to the disclosure. These main components are a (simple) drone or UAV with stabilizing function and optionally only vertical ascent and minimal anti-collision functions as illustrated in the upper part (1) of Figure 2 and a (simple) radio repeater 112 embedded in or hooked on the drone as illustrated in the lower part (2) of Figure 2. The radio repeater 112 may have 5G/LTE/GSM-in functionality and 5G/LTE/GSM-out or alternatively Bluetooth, Zigbee or WiFi-out functionality as shown in Fig. 2.

That means, the radio repeater 112 includes a radio receiver that is configured to receive a radio signal 121 from a base station 120 in a 5G, LTE or GSM radio access technology and a radio transmitter that is configured to transmit a repeated radio signal 113 in a 5G, LTE or GSM radio access technology or alternatively in a Bluetooth, Zigbee, WiFi radio access technology to the mobile phone 131 of the user.

The radio repeater 112 may be embedded in or hooked on the drone 110 shown in the upper part (1) of Figure 2, e.g. by using a hook 111.

A communication system may include a drone 110 with radio repeater 112 attached to the drone 110 and a mobile phone 131 of a user. The mobile phone 131 can be connected to the base station 120 via the flying repeater, i.e. the drone 110 with radio repeater 112. The communication system may additionally include the base station 120 and optionally further network entities.

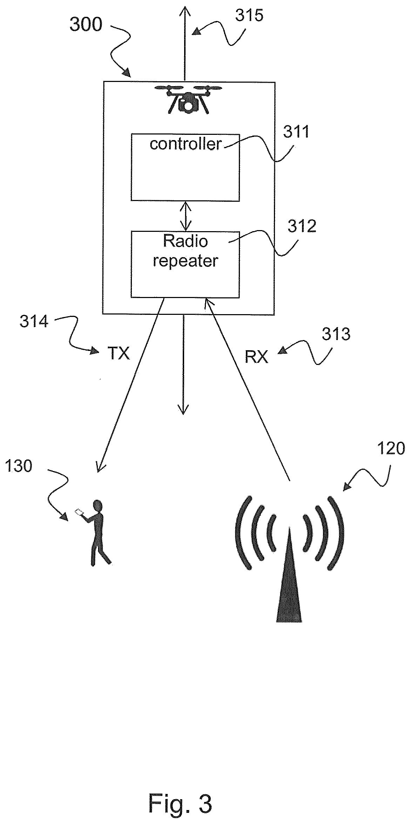

Fig. 3 shows a block diagram illustrating a flyable repeater device 300 according to the disclosure. The flyable repeater device 300 is one exemplary implementation of the flying repeater 110 described above with respect to Figures 1 and 2.

The flyable repeater device 300 includes a radio repeater 312, e.g. a radio repeater 112 as described above with respect to Fig. 2, and a controller 311. The radio repeater 312 is configured to receive a radio signal 313 from a base station 120, to regenerate the received radio signal 313 in order to increase its transmission range, and to transmit the regenerated radio signal 314. The controller 311 is configured to lift the flyable repeater device 300 off the ground upon activation by a user 130 of the UAV 300 in order to enable the radio repeater 312 connecting to the base station 120 and extending the transmission range of the received radio signal 313 to the user 130.

In one implementation form the flyable repeater device 300 is foldable fitting into a pocket of the user 130. During a walk in the forest as shown in Fig. 1 the user 130 can unpack the flyable repeater device from his pocket, unfold the UAV 300 and let the UAV 300 lift from the ground and fly into the air.

In one implementation form of the flyable repeater device 300 the radio repeater 312 is configured to receive a radio signal 313 according to a first radio access technology (RAT) and to transmit the regenerated radio signal 314 according to the first RAT. The first RAT may be for example a mobile communication standard such as 5G, LTE or GSM. In this implementation form, the repeater 312 may just forward and amplify the received radio signal 313.

In an alternative implementation form of the flyable repeater device 300, the radio repeater 312 is configured to receive a radio signal 313 according to a first RAT, to convert the received radio signal 313 from the first RAT into a second RAT and to transmit the regenerated radio signal 314 according to the second RAT. The first RAT may be a mobile communication standard auch as 5G, LTE or GSM for example. The second RAT may be a wireless communication standard such as WiFi, Bluetooth or Zigbee, for example.

In one implementation form of the flyable repeater device 300 the controller 311 may be configured to lift 315 the flyable repeater device 300 in only a vertical ascent above the ground without horizontal movements or with horizontal movements only as required for stabilization purposes or for avoiding obstacles such as tree leaves etc.

The radio repeater 312 may be attached to the flyable repeater device 300, in particular removable attached to the flyable repeater device 300, e.g. hooked to the UAV 300 by using one or more hooks 111 as depicted in Figure 2 or clamped with the UAV 300. Alternatively the radio repeater 312 may be glued to the UAV 300 or mechanically fixed with the UAV 300, e.g. by using screwed fastening. Alternatively the radio repeater 312 may be magnetically fixed with the UAV, e.g. by using permanent magnets.

In an alternative implementation form of the flyable repeater device 300, the radio repeater 312 may be embedded with the controller 311 on a printed circuit board or on a chipset of the flyable repeater device 300.

In one implementation form of the flyable repeater device 300 the controller 311 is configured to navigate the flyable repeater device 300 between a predefined altitude range, e.g. a range between 5 meters to 10 meters corresponding to the height of typical forests. Of course, the flying repeater (C) can be lifted up to other heights than that of the trees, for example between 3 meters and 75 meters, i.e. below manned aviation.

In one implementation form of the flyable repeater device 300 the controller 311 is configured to determine a signal quality of the received radio signal 313, e.g. a received signal strength (RSS). The controller 311 can navigate the flyable repeater device 300 based on an optimization criterion with respect to the signal quality in order to find a position where the signal quality is above a predefined threshold. This threshold may be a threshold that is required for establishing a communication with the mobile network via the base station 120. The controller 311 may stabilize the flyable repeater device 300 within the position where the signal quality is above the predefined threshold.

In one implementation form of the flyable repeater device 300 the controller 311 is configured to navigate the flyable repeater device 300 based on an aerial coverage map. This aerial coverage map may indicate positions where the signal quality is above the predefined threshold.

In one implementation form the flyable repeater device 300 includes a global navigation satellite system (GNSS) receiver for receiving position data from at least one satellite. The position data may indicate a position of the flyable repeater device 300. The controller 311 may be configured to adjust the position data received by the GNSS receiver with coordinates on the aerial coverage map. The controller 311 may further be configured to navigate the flyable repeater device 300 to a position where the signal quality is above the predefined threshold in order to establish a connection with the mobile network via the base station 120.

The controller 311 may indicate the user 130, before lifting the flyable repeater device 300 off the ground, if a position where the signal quality is above the predefined threshold is within a predefined range, e.g. within walking distance from the user 130.

In one implementation form of the flyable repeater device 300 the controller 311 is configured to transmit network coverage information to a network operator, e.g. via the connection of the radio repeater (312) with the base station (120). The network coverage information may be based on the signal quality of the received radio signal 313.

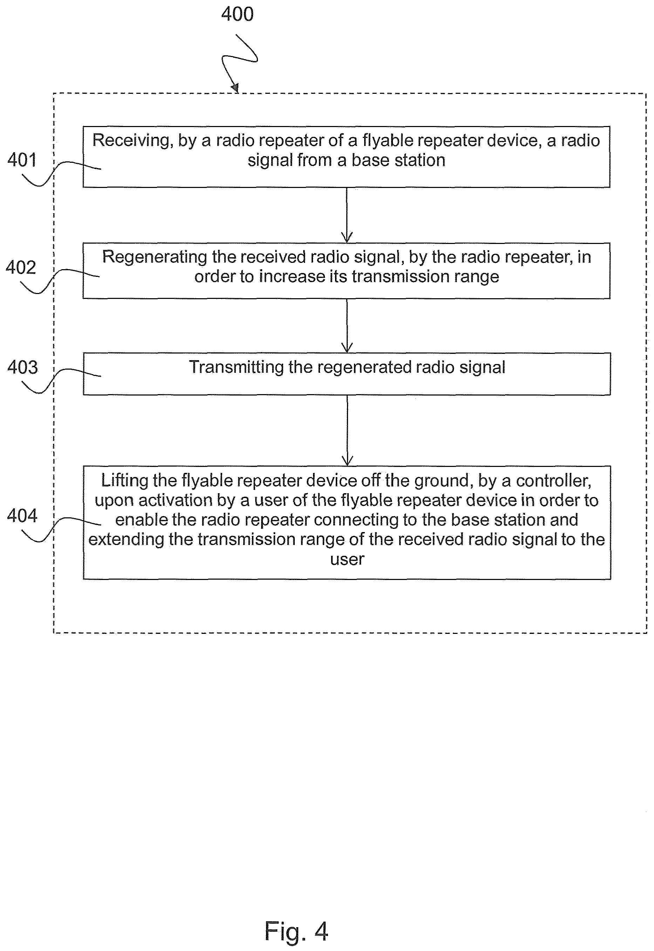

Fig. 4 shows a schematic diagram illustrating a communication method 400 using a flyable repeater device according to the disclosure.

The communication method 400 includes receiving 401, by a radio repeater of a flyable repeater device, e.g. a flyable repeater device 300 as described above with respect to Fig. 3 or a flying repeater 110 as described above with respect to Figs. 1 and 2, a radio signal from a base station.

The communication method 400 further includes: regenerating 402 the received radio signal, by the radio repeater, in order to increase its transmission range. The radio repeater may be a repeater 112 as described above with respect to Figure 2 or Figure 1.

The communication method 400 further includes: transmitting 403 the regenerated radio signal.

The communication method 400 further includes: lifting 404 the flyable repeater device off the ground, by a controller, upon activation by a user of the flyable repeater device in order to enable the radio repeater connecting to the base station and extending the transmission range of the received radio signal to the user.

The method 400 may be applied in a flying repeater or in a flyable repeater device as described above with respect to Figures 1 to 3.

The methods, systems and devices described herein may be implemented as electrical and/or optical circuit within a chip or an integrated circuit or an application specific integrated circuit (ASIC). The invention can be implemented in digital and/or analogue electronic and optical circuitry. The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The present disclosure also supports a computer program product including computer executable code or computer executable instructions that, when executed, causes at least one computer to execute the performing and computing steps described herein, in particular the method 400 as described above with respect to Fig. 4 and the techniques described above with respect to Figs. 1-3. Such a computer program product may include a readable non-transitory storage medium storing program code thereon for use by a computer. The program code may perform the methods and techniques as described above with respect to Figures 1 to 4.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A flyable repeater device (300), comprising:
a radio repeater (312) configured:
to receive a radio signal (313) from a base station (120),
to regenerate the received radio signal (313) in order to increase its transmission range, and
to transmit the regenerated radio signal (314); and
a controller (311) configured:
to lift the flyable repeater device (300) off the ground upon activation by a user (130) of the flyable repeater device (300) in order to enable the radio repeater (312) connecting to the base station (120) and extending the transmission range of the received radio signal (313) to the user (130).

2. The flyable repeater device (300) of claim 1,
wherein the flyable repeater device (300) is foldable fitting into a pocket of the user (130).

3. The flyable repeater device (300) of claim 1 or 2,
wherein the radio repeater (312) is configured to receive a radio signal (313) according to a first radio access technology (RAT) and to transmit the regenerated radio signal (314) according to the first RAT.

4. The flyable repeater device (300) of claim 1 or 2,
wherein the radio repeater (312) is configured to receive a radio signal (313) according to a first RAT, to convert the received radio signal (313) from the first RAT into a second RAT, and to transmit the regenerated radio signal (314) according to the second RAT.

5. The flyable repeater device (300) of claim 4,
wherein the first RAT is a mobile communication standard, in particular 5G, LTE or GSM; and
wherein the second RAT is a wireless communication standard, in particular WiFi, Bluetooth or Zigbee.

6. The flyable repeater device (300) of one of the preceding claims,
wherein the controller (311) is configured to lift (315) the flyable repeater device (300) in only a vertical ascent above the ground.

7. The flyable repeater device (300) of one of the preceding claims,
wherein the radio repeater (312) is attached to the flyable repeater device (300), in particular removable attached to the flyable repeater device (300).

8. The flyable repeater device (300) of one of claims 1 to 6,
wherein the radio repeater (312) is embedded with the controller (311) on a printed circuit board or on a chipset of the flyable repeater device (300).

9. The flyable repeater device (300) of one of the preceding claims,
wherein the controller (311) is configured to navigate the flyable repeater device (300) between a predefined altitude range.

10. The flyable repeater device (300) of one of the preceding claims,
wherein the controller (311) is configured to determine a signal quality of the received radio signal (313), in particular a received signal strength (RSS), and
wherein the controller (311) is configured to navigate the flyable repeater device (300) based on an optimization criterion with respect to the signal quality in order to find a position where the signal quality is above a predefined threshold.

11. The flyable repeater device (300) of claim 10,
wherein the controller (311) is configured to stabilize the flyable repeater device (300) within the position where the signal quality is above the predefined threshold.

12. The flyable repeater device (300) of claim 10 or 11,
wherein the controller (311) is configured to navigate the flyable repeater device (300) based on an aerial coverage map, the aerial coverage map indicating positions where the signal quality is above the predefined threshold.

13. The flyable repeater device (300) of claim 12, comprising:
a global navigation satellite system (GNSS) receiver, configured to receive position data from at least one satellite, the position data indicating a position of the flyable repeater device (300),
wherein the controller (311) is configured to adjust the position data received by the GNSS receiver with coordinates on the aerial coverage map and configured to navigate the flyable repeater device (300) to a position where the signal quality is above the predefined threshold.

14. The flyable repeater device (300) of claim 12 or 13,
wherein the controller (311) is configured to indicate the user (130) before lifting the flyable repeater device (300) off the ground if a position where the signal quality is above the predefined threshold is within a predefined range.

15. The flyable repeater device (300) of one of claims 10 to 14,
wherein the controller (311) is configured to transmit network coverage information to a network operator, in particular via the connection of the radio repeater (312) with the base station (120),
wherein the network coverage information is based on the signal quality of the received radio signal (313).

## Amended claims

### Amended claims in accordance with Rule 137(2) EPC.

1. A flyable repeater device (300), comprising:
a radio repeater (312) configured:
to receive a radio signal (313) from a base station (120),
to regenerate the received radio signal (313) in order to increase its transmission range, and
to transmit the regenerated radio signal (314); and
a controller (311) configured:
to lift the flyable repeater device (300) off the ground upon activation by a user (130) of the flyable repeater device (300) in order to enable the radio repeater (312) connecting to the base station (120) and extending the transmission range of the received radio signal (313) to the user (130),
wherein the flyable repeater device (300) is foldable fitting into a pocket of the user (130).

2. The flyable repeater device (300) of claim 1,
wherein the radio repeater (312) is configured to receive a radio signal (313) according to a first radio access technology (RAT) and to transmit the regenerated radio signal (314) according to the first RAT.

3. The flyable repeater device (300) of claim 1,
wherein the radio repeater (312) is configured to receive a radio signal (313) according to a first RAT, to convert the received radio signal (313) from the first RAT into a second RAT, and to transmit the regenerated radio signal (314) according to the second RAT.

4. The flyable repeater device (300) of claim 3,
wherein the first RAT is a mobile communication standard, in particular 5G, LTE or GSM; and
wherein the second RAT is a wireless communication standard, in particular WiFi, Bluetooth or Zigbee.

5. The flyable repeater device (300) of one of the preceding claims,
wherein the controller (311) is configured to lift (315) the flyable repeater device (300) in only a vertical ascent above the ground.

6. The flyable repeater device (300) of one of the preceding claims,
wherein the radio repeater (312) is attached to the flyable repeater device (300), in particular removable attached to the flyable repeater device (300).

7. The flyable repeater device (300) of one of claims 1 to 5,
wherein the radio repeater (312) is embedded with the controller (311) on a printed circuit board or on a chipset of the flyable repeater device (300).

8. The flyable repeater device (300) of one of the preceding claims,
wherein the controller (311) is configured to navigate the flyable repeater device (300) between a predefined altitude range.

9. The flyable repeater device (300) of one of the preceding claims,
wherein the controller (311) is configured to determine a signal quality of the received radio signal (313), in particular a received signal strength (RSS), and
wherein the controller (311) is configured to navigate the flyable repeater device (300) based on an optimization criterion with respect to the signal quality in order to find a position where the signal quality is above a predefined threshold.

10. The flyable repeater device (300) of claim 9,
wherein the controller (311) is configured to stabilize the flyable repeater device (300) within the position where the signal quality is above the predefined threshold.

11. The flyable repeater device (300) of claim 9 or 10,
wherein the controller (311) is configured to navigate the flyable repeater device (300) based on an aerial coverage map, the aerial coverage map indicating positions where the signal quality is above the predefined threshold.

12. The flyable repeater device (300) of claim 11, comprising:
a global navigation satellite system (GNSS) receiver, configured to receive position data from at least one satellite, the position data indicating a position of the flyable repeater device (300),
wherein the controller (311) is configured to adjust the position data received by the GNSS receiver with coordinates on the aerial coverage map and configured to navigate the flyable repeater device (300) to a position where the signal quality is above the predefined threshold.

13. The flyable repeater device (300) of claim 11 or 12,
wherein the controller (311) is configured to indicate the user (130) before lifting the flyable repeater device (300) off the ground if a position where the signal quality is above the predefined threshold is within a predefined range.

14. The flyable repeater device (300) of one of claims 9 to 13,
wherein the controller (311) is configured to transmit network coverage information to a network operator, in particular via the connection of the radio repeater (312) with the base station (120),
wherein the network coverage information is based on the signal quality of the received radio signal (313).
